(19) **Europäisches Patentamt / European Patent Office / Office européen des brevets**

(11) **EP 1 796 335 B1**

(12) **EUROPEAN PATENT SPECIFICATION**

(45) Date of publication and mention
of the grant of the patent:
**28.01.2009 Bulletin 2009/05**

(51) Int Cl.:
**H04L 12/56** (2006.01)

(21) Application number: **07006879.6**

(22) Date of filing: **04.04.2006**

(54) **Method and apparatus for scheduling uplink packet transmission in a mobile communication system**

Verfahren und Vorrichtung zur Planung von Uplinkpaketübertragung in einem mobilen Kommunikationssystem

Procédé et dispositif pour planifier la transmission de paquets dans la liaison montante dans un système de communication mobile

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.04.2005 KR 20050027981**

(43) Date of publication of application:
**13.06.2007 Bulletin 2007/24**

(62) Document number(s) of the earlier application(s) in accordance with Art. 76 EPC:
**06007130.5 / 1 710 962**

(73) Proprietor: **Samsung Electronics Co., Ltd.**
**Suwon-si**
**Gyeonggi-do 443-742 (KR)**

(72) Inventors:
• **Kim, Soeng-Hun**
**Suwon-si**
**Gyeonggi-do (KR)**
• **Lee, Kook-Heui**
**Suwon-si**
**Gyeonggi-do (KR)**
• **Heo, Youn-Hyoung**
**Suwon-si**
**Gyeonggi-do (KR)**

(74) Representative: **Grünecker, Kinkeldey, Stockmair & Schwanhäusser**
**Anwaltssozietät**
**Leopoldstrasse 4**
**80802 München (DE)**

(56) References cited:
• **"Universal Mobile Telecommunications System (UMTS); FDD enhanced uplink; Overall description; Stage 2 (3GPP TS 25.309 version 6.2.0 Release 6); ETSI TS 125 309" ETSI STANDARDS, EUROPEAN TELECOMMUNICATIONS STANDARDS INSTITUTE, SOPHIA-ANTIPO, FR, vol. 3-R2, no. V620, March 2005 (2005-03), XP014027653 ISSN: 0000-0001**
• **"Feasibility study for enhanced uplink for UTRA FDD (Release 6) 3GPP TR 25.896" 3GPP TR 25.896 V6.0.0, March 2004 (2004-03), page complete, XP002322111**
• **NOKIA: "1-bit Rate Request/Rate Grant Scheduling Signalling" 3GPP TSG-RAN WG1 MEETING #38, 16 August 2004 (2004-08-16), XP002366792**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## BACKGROUND OF THE INVENTION

Field of the Invention

The present invention generally relates to a mobile communication system for transmitting packet data through an uplink. More particularly, the present invention relates to a method and apparatus for efficiently scheduling uplink packet transmission in a Node B.

Description of the Related Art

An asynchronous Wideband Code Division Multiple Access (WCDMA) communication system exploits an Enhanced Uplink Dedicated CHannel (E-DCH or EUDCH). The E-DCH has been proposed to improve the performance of packet transmission for uplink communication in the asynchronous WCDMA communication system.

A mobile communication system for supporting the E-DCH maximizes efficiency of uplink transmission using a Node B-controlled scheduling technique and a Hybrid Automatic Retransmission Request (HARQ) technique. In the Node B-controlled scheduling technique, a Node B receives information about a channel status, a buffer status, and so on of User Equipments (UEs) and controls uplink transmission of the UEs on the basis of the received information. The Node B allows a UE with the good channel status to transmit a large amount of data and minimizes data transmission of a UE with the bad channel status, thereby accommodating efficient use of limited uplink transmission resources.

The HARQ technique executes a HARQ process between a UE and a Node B, thereby increasing the probability of successful transmission at transmission power. Through-the HARQ technique, the Node B soft combines a retransmitted data block with a data block in which an error has occurred during transmission without discarding the erroneous data block, thereby increasing the probability of reception of the data block.

Because orthogonality between signals transmitted from a plurality of UEs is not maintained in the uplink, the signals act as interference to each other. For this reason, an amount of interference to an uplink signal transmitted from a specific UE increases as the number of uplink signals received by the Node B increases. As the amount of interference to the uplink signal transmitted from the specific UE increases, reception performance of the Node B is degraded. Thus, the Node B limits uplink signals capable of being received while guaranteeing the overall reception performance. Radio resources of the Node B are expressed as shown in Equation (1).

$$ROT = I_0/N_0 \qquad\qquad Equation\ (1)$$

In Equation (1), $I_0$ is the total reception wideband power spectral density of the Node B, and No is the thermal noise power spectral density of the Node B. ROT represents uplink radio resources capable of being allocated by the Node B for the E-DCH packet data service.

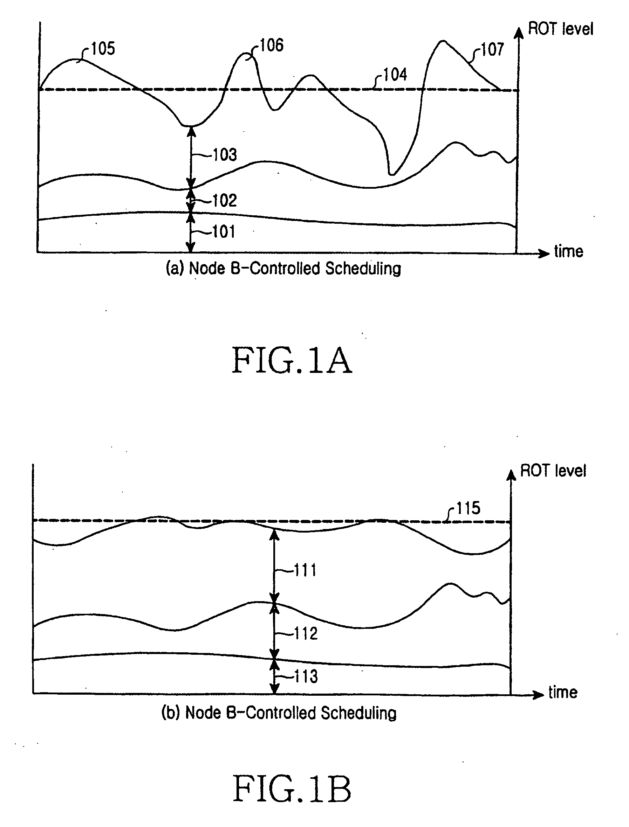

FIGS. 1A and 1B are graphs illustrating variations in uplink radio resources capable of being allocated by the Node B. As illustrated in FIGS. 1A and 1B, ROT representing a total of uplink radio resources capable of being allocated by the Node B can be expressed as a sum of resources 101 and 113 occupied by Inter-Cell Interference (ICI), resources 102 and 112 occupied by voice traffic and other services, and resources 103 and 111 occupied by E-DCH packet traffic.

FIG. 1A illustrates variations in a total ROT when Node B-controlled scheduling is not used.

Referring to FIG. 1A, because scheduling for E-DCH packet traffic is not performed, a level of the total ROT can be higher than that of a target ROT 104 (as indicated by reference numerals 105, 106, and 107) when a plurality of UEs simultaneously transmit packet data at high data rates. In this case, the uplink reception performance is degraded.

FIG. 1B illustrates variations in a total ROT when Node B-controlled scheduling is used.

Referring to FIG. 1B, when the Node B-controlled scheduling is used, it prevents UEs from simultaneously transmitting packet data at high rates. When a high rate is allowed for a specific UE, low rates are allowed for other UEs, such that the total ROT does not exceed a target ROT 115.

When a data rate of the specific UE is high, power received from the UE increases in the Node B and therefore ROT for the UE occupies a large portion of the total ROT. In contrast, when a data rate of the UE is low, power received from the UE decreases in the Node B and therefore ROT for the UE occupies a small portion of the total ROT. The Node B schedules the E-DCH packet data by considering a data rate requested from the UE and a relation between data rates and radio resources.

Using information about requested data rates, buffer statuses, and channel statuses of UEs using the E-DCH, the Node B notifies each UE whether E-DCH data can be transmitted, or performs scheduling to adjust the E-DCH data rate. The Node B-controlled scheduling may be an operation for distributing ROT to the UEs on the basis of the channel and buffer statuses of the UEs for performing E-DCH communication with the Node B.

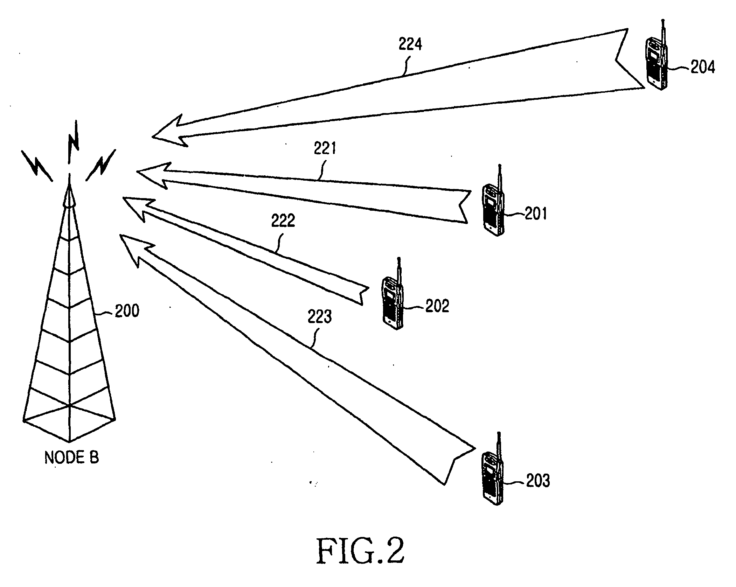

FIG. 2 illustrates a Node B and UEs for performing uplink packet transmission. Referring to FIG. 2, the UEs 201, 202, 203, and 204 transmit uplink packet data at different uplink channel transmission power levels, respectively 221, 222, 223 and 224, according to distances from the Node B 200. The UE 204 farthest from the Node B 200 transmits packet data at the highest uplink channel transmission power level 224. The UE 202 closest to the Node B 200 transmits packet data at the lowest uplink channel transmission power level 222.

The Node B 200 can perform scheduling such that the uplink channel transmission power level is in inverse proportion to the data rate in order to improve the performance of the mobile communication system while maintaining the total ROT and reducing ICI to other cells. Thus, the Node B 200 allocates a small amount of transmission resources to the UE 204 with the highest uplink channel transmission power and allocates a large amount of transmission resources to the UE 202 with the lowest uplink channel transmission power, thereby efficiently maintaining the total ROT.

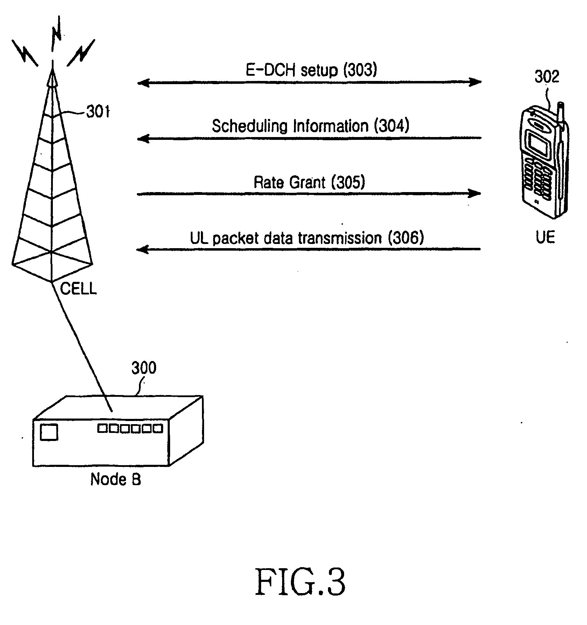

FIG. 3 illustrates an operation in which a Node B allocates transmission resources for E-DCH packet data to a UE and the UE transmits the packet data using the allocated transmission resources.

Referring to FIG. 3, an E-DCH is set up between a Node B 300, a cell 301, and a UE 302 in step 303. The cell 301 provides substantial radio resources, and the Node B 300 controls the cell 301. At this time, a plurality of cells can be connected to one Node B 300. Step 303 includes a process for transmitting and receiving messages through a dedicated transport channel.

After the E-DCH is set up, the UE 302 transmits necessary transmission resource information and uplink (UL) channel status information to the Node B 300 in step 304. The information can include a transmission power value of an uplink channel transmitted from the UE 302, a transmission power margin of the UE 302, buffer status information of the UE 302, and so on.

Upon receiving the information, the Node B 300 compares the uplink channel transmission power with the actually measured reception power and then estimates a channel status. That is, the uplink channel status is determined to be good when a difference between the uplink channel transmission power and the uplink channel reception power is small, but the uplink channel status is determined to be bad when a difference between the transmission power and the reception power is large. When the UE 302 transmits the transmission power margin such that the uplink channel status is estimated, the Node B 300 estimates the uplink transmission power by subtracting the transmission power margin from the maximum transmission power available in the UE 302 that is already known. The Node B 300 sets available transmission resources for an uplink packet channel of the UE 302 using information about an estimated channel status for the UE 302 and a buffer status of the UE 302.

In step 305, the UE 302 is notified of a rate grant of the set transmission resources. At this time, the transmission resources can be defined in a size of data capable of being transmitted in the uplink or in the form of a transmission rate or available transmission power.

The UE 302 sets a size of packet data to be actually transmitted with the notified transmission resources, and transmits data of the set size to the Node B 300 in step 306. At this time, a unit of packet data to be transmitted through the E-DCH is referred to as a Media Access Control-enhanced Protocol Data Unit (MAC-e PDU). The packet data is transmitted through Enhanced-Dedicated Physical Data CHannel (E-DPDCH) in the MAC-e PDU.

As described above, the conventional Node B performs scheduling on the basis of a Buffer Status Report (BSR) of a UE. The BSR may be inefficient according to service. In terms of services in which the BSR is inefficient, a method capable of omitting the BSR for the services in which the BSR is inefficient is being discussed. However, there is a problem in that Node B-controlled scheduling may be inefficiently performed when the BSR is omitted.

Accordingly, there is a need for an improved method and apparatus for scheduling uplink packet transmission in a mobile communication system.

"Universal Mobile Telecommunications System (UMTS); FDD enhanced uplink; Overall description; Stage 2 (3GPP TS 25.309 version 6.2.0 Release 6); ETSI TS 125 309" ETSI Standards, European Telecommunications Standards Institute, Sophia-Antipolis, FR, vol. 3-R2, no. V620, March 2005, relates to a technical specification of the overall support of Frequency Division Duplexing (FDD) Enhanced Uplink in UTRA. The technical objective of the FDD Enhanced Uplink work item is to improve the performance of uplink dedicated transport channels, i.e. to increase capacity and throughput and reduce delay. This work item is applicable for UTRA FDD only. The following techniques are part of the work item: Node B controlled scheduling, which relates to the possibility for the Node B to control, within the limits set by the RNC, the set of TFCs from which the UE may choose a suitable TFC; hybrid ARQ, which relates to rapid retransmissions of erroneously received data packets between UE and Node B; and shorter TTI, which relates to the possibility of introducing a 2 ms TTI.

## SUMMARY OF THE INVENTION

It is the object of the present invention to solve the above and other problems occurring in the prior art, by providing a method and apparatus that can prevent the waste of transmission resources by efficiently performing scheduling for services in which no buffer status is reported in a mobile communication system for supporting an uplink packet transmission.

This object is solved by the subject matter of the independent claims.

Embodiments are given in the dependent claims.

In accordance with an example of the present invention, there is provided a method for performing scheduling in a mobile communication system for transmitting packet data through an uplink, comprising the steps of: monitoring whether service data is generated in a User Equipment (UE) when an Enhanced Uplink Dedicated CHannel (E-DCH) is set up for a service in which no buffer status is reported; generating a data generation start indication for giving notification of service data generation if the service data is generated, and providing the data generation start indication to a Node B; and transmitting the service data after providing the data generation start indication.

In accordance with another example of the present invention, there is provided an apparatus for transmitting uplink data according to scheduling in a User Equipment (UE) of a mobile communication system for transmitting packet data through an uplink, comprising: a data generation detector for monitoring whether service data is generated when an Enhanced Uplink Dedicated CHannel (E-DCH) is set up for a service in which no buffer status is reported; a control signal generator for generating a data generation start indication for giving notification of service data generation if the service data is generated; a control signal transmitter for transmitting the data generation start indication to a Node B; and a controller for generating a command for transmitting the service data after the data generation start indication is transmitted.

In accordance with another example of the present invention, there is provided a method for performing scheduling in a mobile communication system for transmitting packet data through an uplink, comprising the steps of: setting a service in which no buffer status is reported with a Radio Network Controller (RNC); monitoring whether a data generation start indication is received from a User Equipment (UE) in a state in which service scheduling is not performed, the data generation start indication indicating service data generation; and performing the service scheduling if the data generation start indication is received.

In accordance with another example of the present invention, there is provided an apparatus for performing scheduling in a Node B of a mobile communication system for transmitting packet data through an uplink, comprising: a control signal receiver for setting a service in which no buffer status is reported with a Radio Network Controller (RNC) and monitoring whether a data generation start indication is received from a User Equipment (UE), the data generation start indication indicating service data generation; and a controller for performing service scheduling if the data generation start indication is received and allocating transmission resources for the service.

In accordance with an exemplary aspect of the present invention, there is provided a method for performing scheduling in a mobile communication system for transmitting packet data through an uplink, comprising the steps of: receiving, from a Radio Network Controller (RNC), scheduling assistant information comprising an activation time when an Enhanced Uplink Dedicated CHannel (E-DCH) is set up for a service in which no buffer status is reported; running an activation timer in which the activation time is set when an E-DCH setup process is completed; performing scheduling for allocating service transmission resources when the activation timer expires; and notifying a User Equipment (UE) of the allocated transmission resources.

In accordance with another exemplary aspect of the present invention, there is provided an apparatus for performing scheduling in a Node B of a mobile communication system for transmitting packet data through an uplink, comprising: a scheduling assistant information receiver for receiving, from a Radio Network Controller (RNC), scheduling assistant information comprising an activation time when an Enhanced Uplink Dedicated CHannel (E-DCH) is set up for a service in which no buffer status is reported; a controller for running an activation timer in which the activation time is set when an E-DCH setup process is completed and performing scheduling for allocating service transmission resources when the activation timer expires; and a rate grant transmitter for notifying a User Equipment (UE) of the allocated transmission resources.

## BRIEF DESCRIPTION OF THE DRAWINGS

The above and other features and aspects of the present invention will be more clearly understood from the following detailed description taken in conjunction with the accompanying drawings, in which:

FIG. 1A illustrates variations in uplink radio resources when Node B-controlled scheduling is not used;

FIG. 1B illustrates variations in uplink radio resources when Node B-controlled scheduling is used;

FIG. 2 illustrates a Node B and User Equipments (UEs) for performing uplink packet transmission;

FIG. 3 illustrates information transmitted and received between the Node B and the UEs for performing uplink packet transmission;

FIG. 4 illustrates a structure of a UE for performing uplink packet transmission;

FIG. 5 illustrates a problem occurring in the prior art;

FIG. 6 schematically illustrates an example of the present invention;

FIG. 7A is a flowchart illustrating an operation of a UE in accordance with the example of the present invention;

FIG. 7B schematically illustrates a structure of the UE in accordance with the example of the present invention;

FIG. 8 illustrates a structure of a Media Access Control-enhanced (MAC-e) control signal in accordance with the example of the present invention;

FIG. 9A is a flowchart illustrating an operation of a Node B in accordance with the example of the present invention;

FIG. 9B schematically illustrates a structure of the Node B in accordance with the example of the present invention; and

FIG. 10 schematically illustrates an exemplary embodiment of the present invention.

## DETAILED DESCRIPTION OF THE EXEMPLARY EMBODIMENTS

The operation principles of the present invention will be described in detail herein below with reference to the accompanying drawings. In the drawings, the same or similar elements are denoted by the same reference numerals even though they are depicted in different drawings. In the following description, detailed descriptions of functions and configurations incorporated herein that are well known to those skilled in the art are omitted for clarity and conciseness. It is to be understood that the phraseology and terminology employed herein are for the purpose of description and should not be regarded as limiting the present invention.

An important feature of the present invention is that a User Equipment (UE) notifies a Node B of data generation and the Node B starts scheduling on the basis of the notification of data generation, when data is generated from a logical channel that is configured not to perform a Buffer Status Report (BSR) in a mobile communication system for supporting an uplink packet data service. Hereinafter, exemplary embodiments of the present invention will be described with reference to an Enhanced Uplink Dedicated CHannel (E-DCH) of Universal Mobile Telecommunication Service (UMTS) serving as one of third-generation mobile communication services. The present invention is not limited to a specific standard and system as described above. It should be noted that the present invention as described below can be applied to all possible types of communication systems.

A UMTS Terrestrial Radio Access Network (UTRAN) of a UMTS system is provided with Node Bs configured by a plurality of cells and a Radio Network Controller (RNC) for managing radio resources of the Node Bs and the cells.

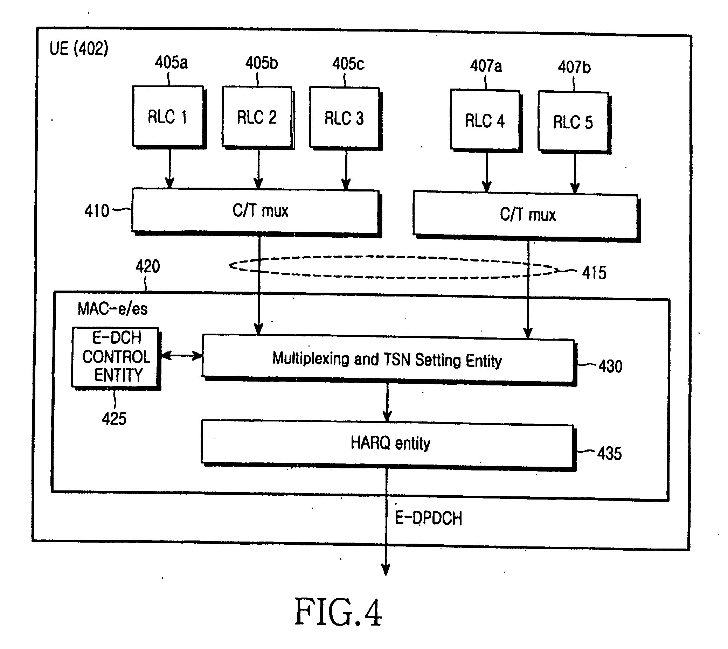

FIG. 4 illustrates a structure of the UE for performing uplink packet transmission through the E-DCH.

Referring to FIG. 4, the UE 402 is provided with Radio Link Control (RLC) layer 405a, 405b, 405c, 407a, and 407b (hereinafter, reference numerals 405a, 405b, and 405c may be referred to as reference numeral 405 and reference numerals 407a and 407b may be referred to as reference numeral 407), Control and Traffic Multiplexers (C/T MUXs) 410 for inserting multiplexing information into data transferred from the RLC layer 405 and 407, and a Media Access Control for E-DCH/Serving RNC (MAC-e/es) layer 420.

RLC entities of the RLC layer 405 and 407 are configured on a logical channel-by-logical channel or radio bearer-by-radio bearer basis, store data generated from a higher layer in associated buffers, and divide or connect the data generated from the higher layer in a size suitable for transmission from a radio layer. The RLC entities report statuses of the buffers to an E-DCH control entity 425 of the MAC-e/es layer 420. For reference, the radio bearers indicate entities of the RLC layer and the higher layer configured to process data of a specific application/service. The logical channels are present between the RLC and MAC layers. One logical channel per radio bearer is provided.

The C/T MUXs 410 insert the multiplexing information into data transferred from the RLC layer 405 and 407. The multiplexing information can be an identifier of a logical channel. A receiving side refers to the identifier and transfers received data to a suitable RLC entity. The C/T MUX 410 is called a MAC-d layer.

A flow of data output from the C/T MUXs 410 is referred to as a MAC-d flow 415. The MAC-d flow 415 is classified according to Quality of Service (QoS) required by logical channels. A flow of data of logical channels requiring the identical QoS is classified as the identical MAC-d flow. The MAC-e/es layer 420 can provide the specified QoS on a MAC-d flow-by-MAC-d flow basis. For example, the number of Hybrid Automatic Retransmission Request (HARQ) retransmissions, transmission power, or so on can be adjusted according to QoS.

The MAC-e/es layer 420 is provided with the E-DCH control entity 425, a multiplexing and Transmission Sequence Number (TSN) setting entity 430, and an HARQ entity 435.

The E-DCH control entity 425 generates E-DCH-related control information. The E-DCH-related control information is information about a Buffer Status (BS) or uplink transmission power. The information is transmitted in a Media Access Control-enhanced Protocol Data Unit (MAC-e PDU) corresponding to E-DCH packet data in a piggyback manner, such that it can be referred to when the Node B performs scheduling. Hereinafter, the E-DCH-related control information is referred to as the MAC-e control signal.

The E-DCH control entity 425 receives information about an associated BS from the RLC entities 405a, 405b, 405c, 407a, and 407b, generates a BSR on the basis of the received information, and transfers the BSR to the multiplexing and TSN setting entity 430. The BSR is piggybacked in a MAC-e PDU by the multiplexing and TSN setting entity 430 and is transmitted to the Node B through an Enhanced-Dedicated Physical Data CHannel (E-DPDCH).

The multiplexing and TSN setting entity 430 inserts multiplexing information and a TSN into data transferred from a higher layer, thereby generating a MAC-e PDU. The HARQ entity 435 controls HARQ transmission and retransmission of the MAC-e PDU. The HARQ entity 435 controls the HARQ transmission and retransmission of the MAC-e PDU in response to an Acknowledge (ACK) or Non-Acknowledge (NACK) signal transmitted from a Node B (not illustrated).

When data is generated in the RLC entity, in other words data is transferred from the higher layer of the RLC layer to a buffer of the RLC entity, the RLC entity reports a buffer status based on the generated data to the E-DCH control entity 425. The E-DCH control entity 425 generates a BSR based on the buffer status, and transmits the BSR to the Node B at an available time.

A scheduler of the Node B allocates transmission resources suitable for the UE 402 on the basis of the BSR. The UE 402 to which the transmission resources are allocated computes an amount of data capable of being transmitted by the transmission resources, receives data from the associated RLC entity or entities according to the data amount, generates a MAC-e PDU, and transmits the generated MAC-e PDU to the Node B.

As described above, the E-DCH basically operates according to the BSR. However, some services do not need the BSR. For example, the BSR is not performed in Voice over Internet Protocol (VoIP) services sensitive to delay or services in which a data generation pattern can be known. For these services, the Node B predicts data generation and then performs scheduling.

The RNC sends scheduling assistant information to the Node B such that scheduling can be performed for a service in which no BSR is performed. The Node B estimates a data generation status of the service on the basis of the scheduling assistant information and performs the service scheduling.

For a service in which no BSR is performed, two scheduling schemes are possible. The first scheme only makes reservations for necessary transmission resources without transferring a rate grant for the service, in other words scheduling assistant information. In this case, the UE transmits data of the service without being assigned transmission resources. This transmission scheme is referred to as the Non-Scheduled Transmission (NST). Because a small amount of data is generated in the NST but the NST is sensitive to delay as in VoIP, the NST is applied to services incapable of enduring delay.

In the second scheme, the Node B directly performs scheduling for services, relatively insensitive to delay, in which a large amount of data is generated as in video streaming.

The following three different types of services are present for E-DCH communication.

(1) NST: The UE does not perform a BSR for service of NST and transmits data for the NST service even when transmission resources are not allocated from the Node B. The Node B receives notification of a bandwidth based on the NST from the RNC and makes reservations for transmission resources corresponding to the notified bandwidth in the NST service.

(2) Scheduled Transmission 1 (ST 1): The UE does not perform a BSR for service of ST 1. However, transmission resources must be allocated from the Node B in order to transmit data of the ST-1 service. Because the Node B does not receive the BSR, scheduling for the ST-1 service is performed using scheduling assistant information.

(3) ST 2: The UE performs the BSR for service of ST 2. Transmission resources must be allocated from the Node B such that the UE transmits data of the ST-2 service. To perform scheduling for the ST-2 service, the Node B does not receive special information from the RNC. The Node B performs scheduling on the basis of the BSR of the UE.

If the Node B performs scheduling using indirect information such as scheduling assistant information as in the NST or ST 1, waste in allocating transmission resources to the associated services can occur when data is not generated.

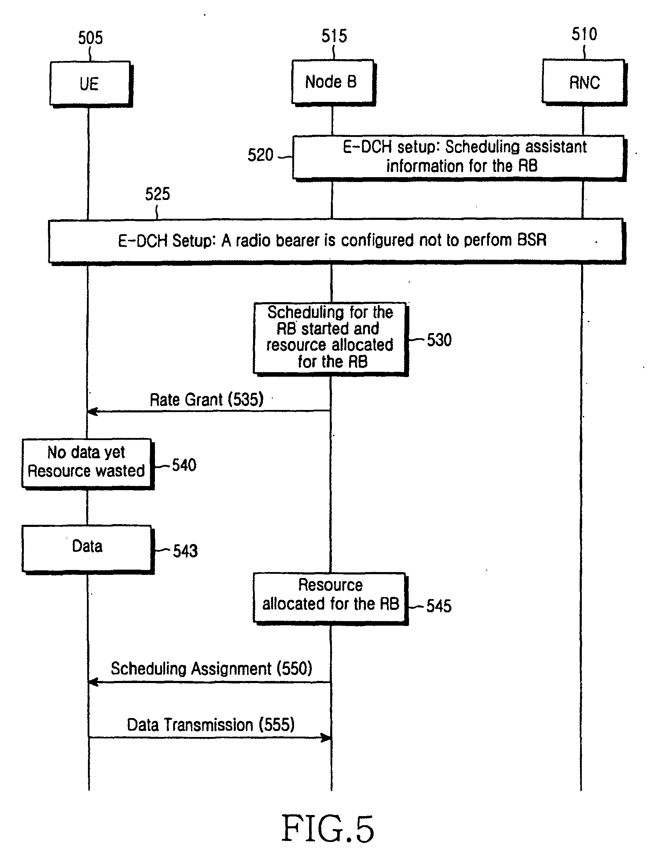

FIG. 5 illustrates a problem occurring when scheduling is performed without a BSR of the UE. Because one service is mapped to one Radio Bearer (RB) in 3rd Generation Partnership Project (3GPP), the service and the RB are used together in the following description. For the E-DCH, one or more RBs can be set up.

Referring to FIG. 5, an RNC 510 is set to provide a service requested by a UE 505 and performs an E-DCH setup process with a Node B 515 in step 520. In the E-DCH setup process, the Node B 515 configures an HARQ entity to provide an E-DCH to the UE 505 and detects uplink code information to be used in the UE 505. At this time, when the service requested by the UE 505 is a service in which no BSR is performed, scheduling assistant information for the requested service is transferred through the E-DCH setup process. An example of the scheduling assistant information is a Guaranteed Bit Rate (GBR) of the associated service.

When the E-DCH setup process associated with the Node B 515 is completed, the RNC 510 performs the E-DCH setup process with the UE 505 in step 525. At this time, the RNC 510 commands the UE 505 not to perform a BSR for an RB associated with the E-DCH. When the E-DCH setup process between the Node B 515 and the UE 505 is completed, the UE 505 and the Node B 515 can transmit and receive data through the E-DCH, respectively.

As described above, the Node B 515 performs scheduling using the scheduling assistant information for the RB in which no BSR is performed (referred to as RB_no_BSR). However, because the scheduling assistant information does not include information indicating when transmission resources start to be allocated, the Node B 515 starts to allocate the transmission resources to the UE 505 at the time of receiving the scheduling assistant information in step 530. Then, the Node B 515 notifies the UE 505 of the allocated transmission resources in step 535. Herein, a rate grant is used to notify the UE 505 of an amount of the allocated transmission resources.

Because an NST or ST-1 service has characteristics of a real-time service, a point of time when data starts to be generated is significantly variable. In an example of a VoIP service, data starts to be generated when a call setup process is completed and a user starts conversation. Thus, data may be absent in the UE 505 even when the transmission resources have been allocated in step 535. In this case, the transmission resources allocated in step 530 are wasted. Because data is absent even when the transmission resources have been allocated as described above, the allocated transmission resources are wasted in step 540 before data to be transmitted is actually generated from the UE 505.

When the UE 505 actually generates service data in step 543, the Node B 515 predicts data generation according to the above-described scheduling assistant information and allocates transmission resources to the UE 505 in step 545. Subsequently, the Node B 515 notifies the UE 505 of the allocated transmission resources through a rate grant in step 550. The UE 505 transmits the generated data through the E-DCH using the allocated transmission resources in step 555.

*Example*

In a first exemplary embodiment of the present invention for addressing the above-described problem, a UE notifies a Node B that data has been generated for an RB associated with a service in which the UE does not perform a BSR, and the Node B starts to allocate transmission resources after receiving the notification, such that the waste of transmission resources is prevented.

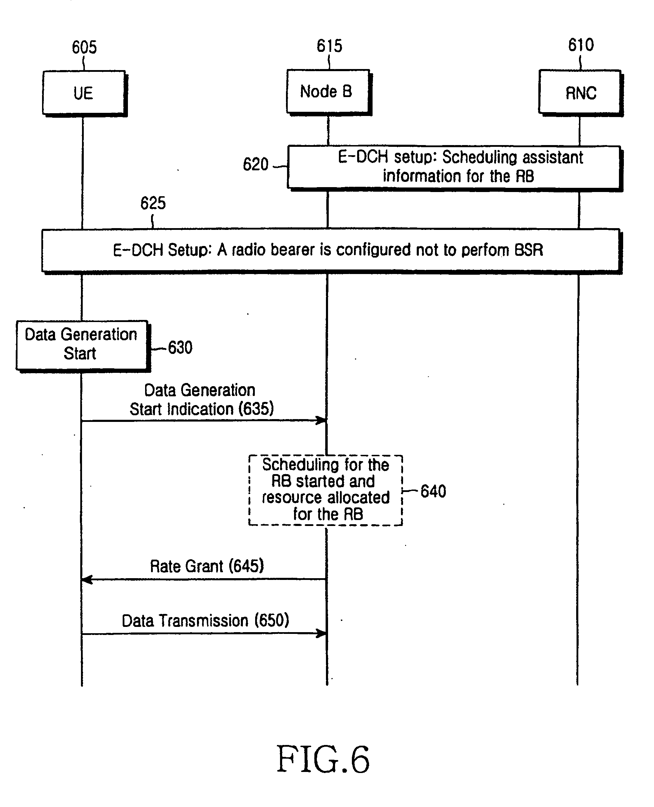

FIG. 6 schematically illustrates an operation in accordance with the example of the present invention.

Referring to FIG. 6, an RNC 610 is set to provide a service requested by a UE 605 and performs an E-DCH setup process with a Node B 615 in step 620. Through this process, the Node B 615 configures an HARQ entity to provide an E-DCH to the UE 605 and detects uplink code information to be used in the UE 605. When the service requested by the UE 605 is a service in which no BSR is performed, scheduling assistant information for the requested service is transferred through the E-DCH setup process and also notification indicating whether the requested service is an NST or ST-1 type is given. If the requested service is the NST or ST-1 type, the Node B 615 does not allocate transmission resources for the service even when the E-DCH setup process is completed and waits to receive a data generation indication from the UE 605.

When the E-DCH setup process associated with the Node B 615 is completed, the RNC 610 performs the E-DCH setup process with the UE 605 in step 625. At this time, the RNC 610 commands the UE 605 not to perform a BSR for an RB associated with the requested service. For example, when the RB is mapped to the NST type, the RNC 610 also provides bandwidth information capable of being transmitted in NST of the UE 605. When the RB is mapped to the ST-1 type, the RNC 610 only gives notification that a BSR for the RB must not be performed.

Upon completing the E-DCH setup process, the UE 605 monitors whether data of an RB in which no BSR is performed is generated. If data for the RB is generated in step 630, the UE 605 notifies the Node B 615 of the data generation in step 635. For example, information for giving notification of the data generation can be transmitted as MAC-e control information. Hereinafter, the MAC-e control information for giving the notification of the data generation is referred to as the data generation start indication.

Upon receiving the data generation start indication for the RB from the UE 605, the Node B 615 allocates transmission resources for the RB in step 640. When the RB is the ST-1 type, the Node B 615 notifies the UE 605 of the allocated transmission resources in step 645. However, when the RB is the NST type, step 645 is omitted. When the RB is the ST-1 type, the UE 605 transmits data of the RB with the allocated transmission resources in step 650. However, when the RB is the NST type, the UE 605 transmits data of the RB even when the Node B 615 does not allocate transmission resources.

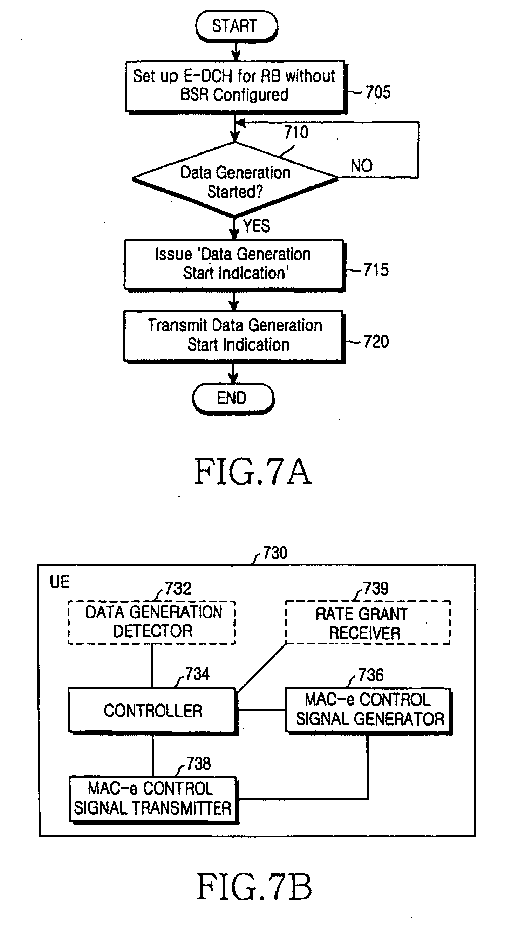

FIG. 7A is a flowchart illustrating an operation of a UE in accordance with the example of the present invention.

Referring to FIG. 7A, an E-DCH is set up such that no BSR is performed for a specific RB in step 705. The UE monitors whether data of the RB is generated in step 710.

If, as a result of monitoring, it is determined that data of the RB is generated, the UE proceeds to step 715. If data of the RB is generated, it may mean that an RLC buffer receives a first packet in a state in which no packet has been generated during a predetermined time interval, or after the RB is set up and is connected to the E-DCH.

In step 715, the UE generates a MAC-e control signal including a 'data generation start indication' for giving notification of the data generation.

In step 720, the UE transmits the generated MAC-e control signal including the data generation start indication to a Node B. Upon receiving the data generation start indication, the Node B allocates transmission resources for the RB. The UE transmits data using the allocated transmission resources.

FIG. 7B schematically illustrates a structure of the UE in accordance with the example of the present invention;

Referring to FIG. 7B, the UE 730 is provided with a data generation detector 732, a controller 734, a MAC-e control signal generator 736, a MAC-e control signal transmitter 738, and a rate grant receiver 739.

The data generator detector 732 monitors whether data of an RB mapped to NST or ST 1 is generated. That is, if data of the RB in which no BSR is performed is generated, the data generation detector 732 notifies the controller 734 that data of the RB is generated.

Then, the controller 734 commands the MAC-e control generator 736 to generate a data generation start indication of the RB, and commands the MAC-e control signal transmitter 738 to transmit the generated data generation start indication to a Node B. Then, the MAC-e control signal generator 736 generates the data generation start indication of the RB and transfers the generated data generation start indication to the MAC-e control signal transmitter 738. Upon receiving the data generation start indication, the MAC-e control signal transmitter 738 transmits a MAC-e control signal including the data generation start indication to the Node B and gives notification that data of the RB has been generated.

Then, the rate grant receiver 739 receives a rate grant of transmission resources allocated from the Node B, and the controller 734 controls a data transmitter (not illustrated) to transmit the generated data according to the allocated transmission resources.

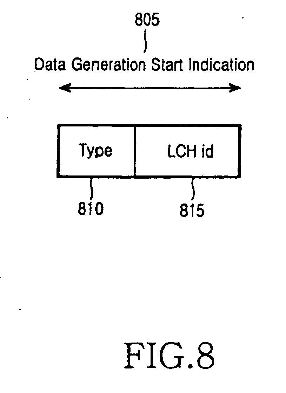

FIG. 8 illustrates an example of the data generation start indication in accordance with the example of the present invention.

Referring to FIG. 8, the data generation start indication 805 is provided with a type field 810 and a Logical CHannel identifier (LCH id) 815. There are various types of MAC-e control signals. The type field 810 indicates a type of a MAC-e control signal. The logical channel identifier 815 indicates an RB in which data has started to be generated. An operation for generating the data generation start indication in step 715 can include an operation for coding the type field 810 and the logical channel identifier field 815 to proper values.

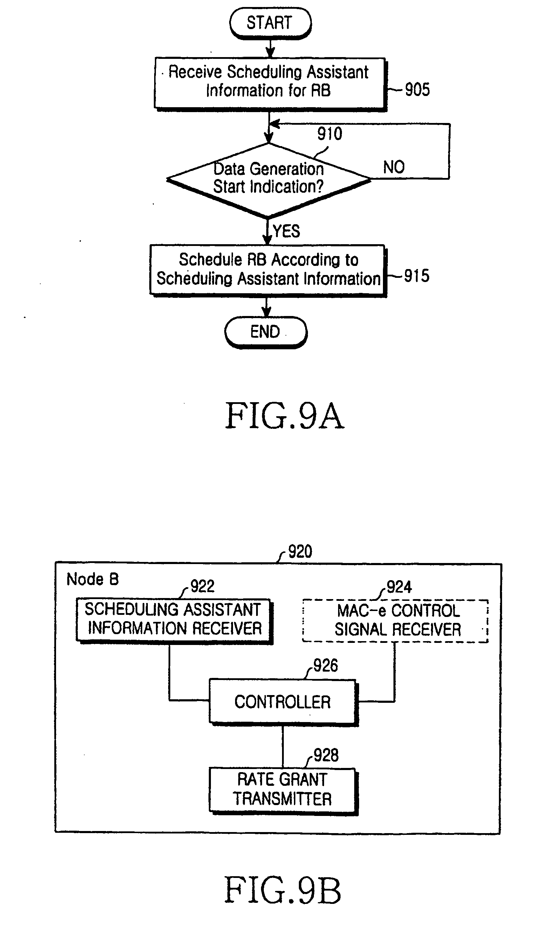

FIG. 9A is a flowchart illustrating an operation of a Node B in accordance with the example of the present invention.

Referring to FIG. 9A, the Node B receives scheduling assistant information for a specific RB associated with an E-DCH from an RNC in step 905. When the RB does not transfer a BSR, the Node B excludes the RB from scheduling. That is, transmission resources are not allocated for the RB. In step 910, the Node B monitors whether a data generation start indication is received from the UE in a state in which transmission resources are not allocated for the RB. If the data generation start indication is received as a monitoring result, the Node B proceeds to step 915. If the data generation start indication has been received, it means that the data generation start indication with a logical channel identifier equal to that of the RB has been received.

In step 915, the Node B schedules the RB on the basis of the scheduling assistant information received in step 905. The Node B notifies the UE of transmission resources allocated as a scheduling result using a rate grant.

FIG. 9B schematically illustrates a structure of the Node B in accordance with the example of the present invention.

Referring to FIG. 9B, the Node B 920 is provided with a scheduling assistant information receiver 922, a MAC-e control signal receiver 924, a controller 926, and a rate grant transmitter 928.

The scheduling assistant information receiver 922 receives, from an RNC, scheduling assistant information for an RB in which buffer status information is not reported. Upon receiving a data generation start indication from a UE, the MAC-e control signal receiver 924 transfers the data generation start indication to the controller 926.

When a logical channel identifier of the received data generation start indication matches that of the RB, the controller 926 determines that the data is associated with the data generation start indication. The controller 926 is in a waiting state without allocating transmission resources for the RB before the data generation start indication is received from the MAC-e control signal receiver 924. When the data generation start indication is obtained from the MAC-e control signal receiver 924, transmission resources for the RB are allocated using the received scheduling assistant information after detecting that data of the RB has been generated.

The rate grant transmitter 928 transmits a rate grant of the transmission resources allocated for the RB to the UE.

*Exemplary Embodiment*

A second exemplary embodiment of the present invention proposes a method for giving notification of a scheduling start time of a Node B for a specific RB, in other words an activation time, as scheduling assistant information when an RNC sets up an E-DCH. An E-DCH setup process is first performed between the RNC and the Node B and then is performed between the RNC and a UE. That is, the scheduling assistant information received by the Node B is transferred before the E-DCH for the UE is set up. Transmission resources are wasted during a period of time when the scheduling assistant information is transferred. When the activation time is set on the basis of a delay time, the waste of transmission resources can be prevented during the delay time.

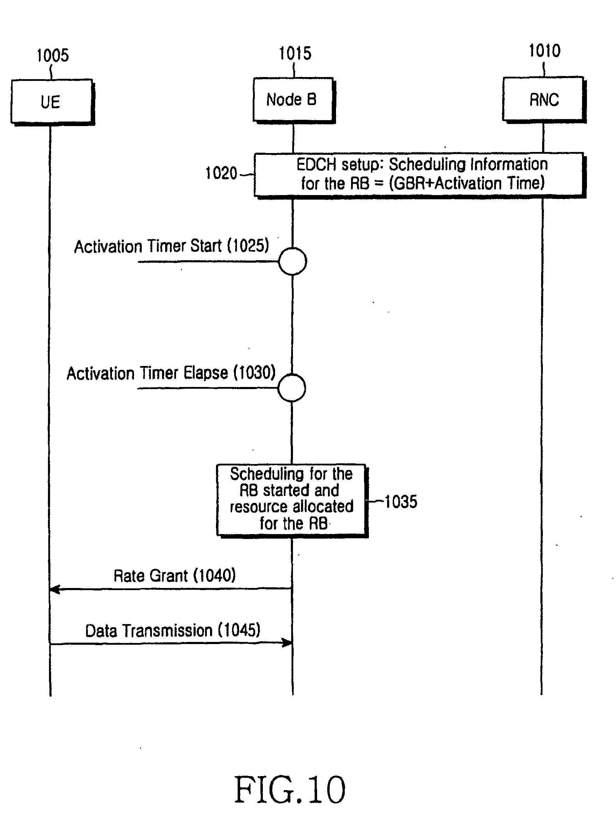

FIG. 10 is a signaling flow diagram illustrating the embodiment of the present invention.

Referring to FIG. 10, an RNC 1010 is set to provide a service requested by a UE 1005 through an E-DCH and performs an E-DCH setup process with a Node B 1015 in step 1020. At this time, the Node B 1015 configures an HARQ entity to provide the E-DCH to the UE 1005 and detects uplink code information to be used in the UE 1005. When the service requested by the UE 1005 is a service in which no BSR is performed, scheduling assistant information for the requested service is transferred through the E-DCH setup process and also notification indicating whether the requested service is an NST or ST-1 type is given. The scheduling assistant information includes a logical channel identifier mapped to the service, bandwidth-related information such as a GBR, and an activation time.

In step 1025, the Node B 1015 runs an activation timer in which the activation time is set without allocating transmission resources for the service when completing the E-DCH setup process. When the activation timer expires in step 1030, the Node B 1015 starts scheduling for the service in step 1035. The scheduling for the service indicates an operation for allocating necessary transmission resources when the service is NST, and indicates an operation for allocating necessary transmission resources when the service is ST 1. In step 1040, the Node B 1015 notifies the UE 1005 of the allocated transmission resources.

Then, the UE 1005 transmits data of the service independently or according to the allocated transmission resources in step 1045.

An operation of the Node B in accordance with the embodiment of the present invention will be described with reference to FIG. 9B.

The scheduling assistant information receiver 922 receives scheduling assistant information and an activation time for a specific RB from the RNC and sends the scheduling assistant information and the activation time to the controller 926. When an E-DCH setup process associated with the RNC is completed, the controller 926 runs a activation timer according to the received activation time. Then, when the activation timer expires, transmission resources for the RB are allocated using the received scheduling assistant information. The rate grant transmitter 928 transmits a rate grant of the allocated transmission resources from the controller 926 to the UE.

An operation of the UE in accordance with the exemplary embodiment of the present invention will be described with reference to FIG. 7B.

The rate grant receiver 739 of the UE 730 receives a rate grant of transmission resources allocated for a specific RB from the Node B, and transfers the received rate grant to the controller 734. The controller 734 controls an operation for transmitting data of the RB to the Node B according to the allocated transmission resources.

As is apparent from the above description, the present invention has the following effects.

In accordance with the example of the present invention, a Node B is notified of a point of time when data is first generated for a service in which no BSR is performed, thereby efficiently performing scheduling and preventing the unnecessary waste of transmission resources. In accordance with the exemplary embodiment of the present invention, the Node B can prevent an unnecessary allocation of transmission resources without additional signaling overhead.

Although the exemplary embodiment of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims, along with their full scope of equivalents.

Important Note:

While the attached claims relate to a preferred aspect of the present invention, the applicant wishes to reserve the right to file one or several further divisional applications at a later point in time for other aspects disclosed in the application. Those further applications will be divided out from the present divisional application. By this statement, the public is herewith informed that more divisional applications relating to different subject matter may follow.

**Claims**

1.  A method for performing scheduling in a mobile communication system for transmitting packet data through an uplink, the method **characterized by** comprising the steps of:

    receiving (1020), from a Radio Network Controller, RNC, scheduling assistant information (304) comprising an activation time when an Enhanced Uplink Dedicated Channel, E-DCH, is set up for a service in which no buffer status is reported;
    running (1025) an activation timer in which the activation time is set when an E-DCH setup process is completed;
    starting to perform scheduling (1035) for allocating service transmission resources when the activation timer expires; and
    notifying (1040) a User Equipment, UE, of the transmission resources allocated by the scheduling.

**2.** The method of claim 1, wherein the service in which no buffer status is reported comprises:

a Non-Scheduled Transmission, NST, service for receiving notification of a service bandwidth from the RNC and transmitting data from the UE without a transmission resource allocation of a Node B for allocating transmission resources mapped to the service bandwidth; and
a Scheduled Transmission, ST, service for transmitting data from the UE according to a transmission resource allocation of the Node B for performing service scheduling using scheduling assistant information from the RNC.

**3.** The method of claim 1, wherein the scheduling assistant information comprises service bandwidth-related information and a logical channel identifier associated with the service.

**4.** An apparatus for performing scheduling in a Node B of a mobile communication system for transmitting packet data through an uplink, the apparatus **characterized by** comprising:

a scheduling assistant information receiver (922) adapted to receive from a Radio Network Controller, RNC, scheduling assistant information comprising an activation time when an Enhanced Uplink Dedicated Channel, E-DCH, is set up for a service in which no buffer status is reported;
a controller (926) adapted to run an activation timer in which the activation time is set when an E-DCH setup process is completed and start to perform scheduling for allocating service transmission resources when the activation timer expires; and
a rate grant transmitter (928) adapted to notify a User Equipment, UE, of the transmission resources allocated by the scheduling.

**5.** The apparatus of claim 4, wherein the service in which no buffer status is reported comprises:

a Non-Scheduled Transmission, NST, service for receiving notification of a service bandwidth from the RNC and transmitting data from the UE without a transmission resource allocation of the Node B for allocating transmission resources mapped to the service bandwidth; and
a Scheduled Transmission, ST, service for transmitting data from the UE according to a transmission resource allocation of the Node B for performing service scheduling using scheduling assistant information from the RNC.

**6.** The apparatus of claim 4, wherein the scheduling assistant information comprises service bandwidth-related information and a logical channel identifier associated with the service.

**Patentansprüche**

**1.** Verfahren zum Durchführen von Scheduling in einem Mobilkommunikationssystem zum Senden von Paketdaten über einen Uplink, wobei das Verfahren **dadurch gekennzeichnet ist, dass** es die folgenden Schritte umfasst:

Empfangen (1020) von Scheduling-Unterstützungsinformationen (304), die eine Aktivierungszeit umfassen, wenn ein Enhanced Uplink Dedicated Channel für einen Dienst eingerichtet ist, in dem kein Puffer-Status gemeldet wird, von einem Radio Network Controller;
Betreiben (1025) eines Aktivierungs-Timers, in dem die Aktivierungszeit festgelegt ist, wenn ein Einrichtungsprozess des Enhanced Uplink Dedicated Channel abgeschlossen ist;
Starten der Durchführung von Scheduling (1035) zum Zuweisen von Dienst-Senderessourcen, wenn der Aktivierungs-Timer abläuft; und
Informieren (1040) eines Benutzer-Endgerätes über die durch das Scheduling zugewiesenen Senderessourcen.

**2.** Verfahren nach Anspruch 1, wobei der Dienst, in dem kein Puffer-Status gemeldet wird, umfasst:

einen Non-Scheduled-Transmission-Dienst zum Empfangen von Information über eine Dienst-Bandbreite von dem Radio Network Controller und zum Senden von Daten von dem Benutzer-Endgerät ohne eine Senderessourcen-Zuweisung eines Node B zum Zuweisen von Senderessourcen, die der Dienst-Bandbreite angeordnet sind; und
einen Scheduled-Transmission-Dienst zum Senden von Daten von dem Benutzer-Endgerät gemäß einer Senderessourcen-Zuweisung des Node B zum Durchführen von Dienst-Scheduling unter Verwendung von Scheduling-Unterstützungsinformationen von dem Radio Network Controller.

**3.** Verfahren nach Anspruch 1, wobei die Scheduling-Unterstützungsinformationen Informationen, die sich auf Dienst-Bandbreite beziehen, und eine Kennung eines logischen Kanals umfassen, die mit dem Dienst verknüpft ist.

**4.** Vorrichtung zum Durchführen von Scheduling in einem Node B eines Mobilkommunikationssystems zum Senden von Paketdaten über einen Uplink, wobei die Vorrichtung **dadurch gekennzeichnet ist, dass** sie umfasst:

eine Scheduling-Unterstützungsinformations-Empfangseinrichtung (922), die so eingerichtet ist, dass sie Scheduling-Unterstützungsinformationen von einem Radio Network Controller empfängt, die eine Aktivierungszeit umfassen, wenn ein Enhanced Uplink Dedicated Channel für einen Dienst eingerichtet ist, in dem kein Puffer-Status gemeldet wird;
eine Steuereinrichtung (926), die so eingerichtet ist, dass sie einen Aktivierungs-Timer betreibt, in dem die Aktivierungszeit festgelegt ist, wenn ein Prozess des Einrichtens des Enhanced Uplink Dedicated Channel abgeschlossen ist, und beginnt, Scheduling zum Zuweisen von Dienst-Senderessourcen durchzuführen, wenn der Aktivierungs-Timer abläuft; und
eine Ratengewährungs-Sendeeinrichtung (928), die so eingerichtet ist, dass sie ein Benutzer-Endgerät über die durch das Scheduling zugewiesenen Senderessourcen informiert.

**5.** Vorrichtung nach Anspruch 4, wobei der Dienst, in dem kein Puffer-Status gemeldet wird, umfasst:

einen Non-Scheduled-Transmission-Dienst zum Empfangen von Information über eine Dienst-Bandbreite von dem Radio Network Controller und zum Senden von Daten von dem Benutzer-Endgerät ohne eine Senderessourcen-Zuweisung des Node B zum Zuweisen von Senderessourcen, die der Dienst-Bandbreite zugeordnet sind; und
einen Scheduled-Transmission-Dienst zum Senden von Daten von dem Benutzer-Endgerät gemäß einer Senderessourcen-Zuweisung des Node B zum Durchführen von Dienst-Scheduling unter Verwendung von Scheduling-Unterstützungsinformationen von dem Radio Network Controller.

**6.** Vorrichtung nach Anspruch 4, wobei die Scheduling-Unterstützungsinformationen Informationen, die sich auf Dienst-Bandbreite beziehen, und eine Kennung eines logischen Kanals umfassen, die mit dem Dienst verknüpft ist.

**Revendications**

**1.** Procédé pour effectuer une planification dans un système de communication mobile pour la transmission de données en paquets en passant par une liaison montante, le procédé étant **caractérisé en ce qu'**il comprend les étapes qui consistent :

à recevoir (1020), d'un contrôleur de réseau radio, RNC (pour "Radio Network Controller"), une information (304) d'assistant de planification comportant un temps d'activation lorsqu'un canal dédié de liaison montante renforcée, E-DCH (pour "Enhanced Uplink Dedicated Channel") est établi pour un service dans lequel aucun état de tampon n'est rapporté ;
à faire fonctionner (1025) une minuterie d'activation dans laquelle le temps d'activation est établi lorsqu'un processus d'établissement E-DCH est achevé ;
à commencer à effectuer (1035) une planification pour allouer des ressources de transmission de service lorsque la minuterie d'activation expire ; et
à notifier (1040) un Equipement d'Utilisateur (UE pour "User Equipment") des ressources de la transmission allouées par la planification.

**2.** Procédé selon la revendication 1, dans lequel le service dans lequel aucun état de tampon n'est rapporté comprend :

un service de transmission non planifié, NST (pour "Non-Scheduled Transmission") destiné à recevoir une notification d'une bande passante de service provenant du contrôleur RNC et à transmettre des données depuis l'UE sans allocation de ressource de transmission d'un Noeud B pour allouer des ressources de transmission appliquées à la bande passante de service ; et
un service de transmission planifié, ST (pour "Scheduled Transmission") destiné à transmettre des données depuis l'UE conformément à une allocation de ressource de transmission du Noeud B pour effectuer une planification de service en utilisant une information d'assistant de planification provenant du contrôleur RNC.

**3.** Procédé selon la revendication 1, dans lequel l'information d'assistant de planification comprend une information liée à une bande passante de service et un identificateur de canal logique associé au service.

**4.** Appareil pour effectuer une planification dans un Noeud B d'un système de communication mobile pour la transmission de données en paquets en passant par une liaison montante, l'appareil étant **caractérisé en ce qu'**il comporte :

un récepteur (922) d'information d'assistant de planification conçu pour recevoir d'un contrôleur de réseau radio, RNC, une information d'assistant de planification comprenant un temps d'activation lorsqu'un canal dédié de liaison montante renforcé, E-DCH, est établi pour un service dans lequel aucun état de tampon n'est rapporté ;
un contrôleur (926) conçu pour faire fonctionner une minuterie d'activation dans laquelle le temps d'activation est établi lorsqu'un processus d'établissement de E-DCH est achevé et pour commencer à effectuer une planification pour allouer des ressources de transmission de service lorsque la minuterie d'activation expire ; et
un émetteur (928) de délivrance de taux conçu pour notifier un Equipement d'Utilisateur, UE, des ressources de transmission allouées par la planification.

**5.** Appareil selon la revendication 4, dans lequel le service dans lequel aucun état de tampon n'est rapporté comprend :

un service de transmission non planifié, NST destiné à recevoir une notification d'une bande passante de service provenant du RNC et à transmettre des données depuis l'UE sans allocation de ressource de transmission du Noeud B pour allouer des ressources de transmission appliquées à la bande passante de service ; et
un service de transmission planifié, ST, pour la transmission de données depuis l'UE conformément à une allocation de ressource de transmission du Noeud B pour effectuer une planification de service en utilisant une information d'assistant de planification provenant du RNC.

**6.** Appareil selon la revendication 4, dans lequel l'information d'assistant de planification comprend une information liée à une bande passante de service et un identificateur de canal logique associé au service.

(a) Node B-Controlled Scheduling

# FIG.1A

(b) Node B-Controlled Scheduling

# FIG.1B

FIG.2

EP 1 796 335 B1

E-DCH setup (303)

Scheduling Information (304)

Rate Grant (305)

UL packet data transmission (306)

302

UE

301

CELL

300

Node B

# FIG.3

FIG.4

EP 1 796 335 B1

505

UE

515

Node B

510

RNC

520 — E-DCH setup: Scheduling assistant
information for the RB

525

E-DCH Setup: A radio bearer is configured not to perfom BSR

Scheduling for the
RB started and
resource allocated
for the RB

530

Rate Grant (535)

No data yet
Resource wasted

540

Data

543

Resource
allocated for the RB

545

Scheduling Assignment (550)

Data Transmission (555)

FIG.5

605
UE

615
Node B

610
RNC

620 — E-DCH setup: Scheduling assistant information for the RB

625
E-DCH Setup: A radio bearer is configured not to perfom BSR

Data Generation Start —630

Data Generation Start Indication (635)

Scheduling for the RB started and resource allocated for the RB —640

Rate Grant (645)

Data Transmission (650)

FIG.6

START

Set up E-DCH for RB without
BSR Configured ~705

710

Data Generation
Started? NO

YES

Issue 'Data Generation
Start Indication' ~715

Transmit Data Generation
Start Indication ~720

END

# FIG.7A

730

UE

732
DATA GENERATION
DETECTOR

739
RATE GRANT
RECEIVER

734
CONTROLLER

736
MAC-e CONTROL
SIGNAL GENERATOR

738
MAC-e CONTROL
SIGNAL TRANSMITTER

# FIG.7B

805

Data Generation Start Indication

| Type | LCH id |
|------|--------|

810        815

# FIG.8

START

Receive Scheduling Assistant
Information for RB ~905

Data Generation
Start Indication? ── NO
910

YES

Schedule RB According to
Scheduling Assistant Information ~915

END

# FIG.9A

920

Node B

SCHEDULING ASSISTANT
INFORMATION RECEIVER
922

MAC-e CONTROL
SIGNAL RECEIVER
924

CONTROLLER
926

RATE GRANT
TRANSMITTER
928

# FIG.9B

FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Universal Mobile Telecommunications System (UMTS); FDD enhanced uplink; Overall description; Stage 2 (3GPP TS 25.309 version 6.2.0 Release 6); ETSI TS 125 309. *ETSI Standards, European Telecommunications Standards Institute,* March 2005, vol. 3 (V620